Europäisches Patentamt

European Patent Office

Office européen des brevets

(11) Veröffentlichungsnummer: **0 048 306**
**B1**

(12) **EUROPÄISCHE PATENTSCHRIFT**

(45) Veröffentlichungstag der Patentschrift:
18.04.84

(21) Anmeldenummer: **80108152.2**

(22) Anmeldetag: **23.12.80**

(51) Int. Cl.³: **F 16 L 11/16**

(54) **Flexibles Wellrohr.**

(30) Priorität: **19.09.80 CA 360581**

(43) Veröffentlichungstag der Anmeldung:
**31.03.82 Patentblatt 82/13**

(45) Bekanntmachung des Hinweises auf die Patenterteilung:
**18.04.84 Patentblatt 84/16**

(84) Benannte Vertragsstaaten:
**DE FR IT NL SE**

(56) Entgegenhaltungen:
**AT - B - 326 965**
**DE - A - 2 020 547**
**DE - A - 2 829 283**
**DE - B - 2 654 963**
**DE - U - 1 940 366**
**DE - U - 7 836 197**
**FR - A - 1 527 259**
**US - A - 4 108 212**

(73) Patentinhaber: **SIEGWART Emil,**
**Michael-Blatter-Strasse 6, D-6603 Sulzbach-Neuweiler**
**(DE)**

(72) Erfinder: **SIEGWART Emil, Michael-Blatter-Strasse 6,**
**D-6603 Sulzbach-Neuweiler (DE)**

(74) Vertreter: **Eitle, Werner, Dipl.-Ing. et al, Hoffmann. Eitle**
**& Partner Patentanwälte Arabellastrasse 4,**
**D-8000 München 81 (DE)**

Flexibles Wellrohr

Die Erfindung betrifft ein flexibles Wellrohr aus einem schraubenlinienförmig gewickelten dünnen Blechband mit parallel zu seiner Längsrichtung sich erstreckenden Wellen, bei welchem Rohr jeweils mindestens eine Welle des einen Seitenrandes eines Bandwickels in mindestens einer Welle am anderen überlappenden Seitenrand des folgenden Bandwickels liegt und die Scheitel von ineinandergelegten Wellen nur um einen Teil der Wellenhöhe derart niedergedrückt sind, dass die derart verformten Wellenscheitel breiter sind als der sich anschliessende Wellenquerschnitt, wobei die niedergedrückte Scheitel besitzenden Wellen ausserhalb der Niederdrückungen etwa senkrecht oder nahezu senkrecht zur Rohrachse sich erstreckende Flanken bzw. Seitenwände haben. Bei gewickelten Wellrohren müssen die aufeinanderfolgenden Bandwickel an ihren überlappenden Bandrändern miteinander verbunden werden. Dies geschieht entweder durch Falze oder aber durch Eindrücken der rohrauswärts gerichteten Wellenscheitel radial rohreinwärts, wodurch sich eine Verbreiterung der Wellenberge der ineinanderliegenden Wellen zweier benachbarter Bandwickel ergibt, die zu einem Ineinanderhaken dieser Wellen führt. Dieses Ein- oder Niederdrücken der Wellenscheitel kann kontinuierlich über den gesamten Rohrumfang oder an mehreren über den Rohrumfang voneinander getrennten Stellen jeweils über nur eine kurze Rohrumfangslänge erfolgen.

Die bekannten Wellrohre mit der letztgenannten Verbindung der Bandwickel sind in der Regel doppellagig. Dies wird dadurch erreicht, dass sich die aufeinanderfolgenden Bandwickel um jeweils etwa die Hälfte ihrer Wickelbreite überlappen. Dabei sind sämtliche Wellen, also sowohl die mit den niedergedrückten Wellenscheiteln als auch die ohne niedergedrückte Wellenscheitel mit etwa senkrecht zur Rohrachse sich erstreckenden Flanken ausgestattet (DE-U-7 836 197). Die Doppellagigkeit der Rohrwandung und die vorgenannte senkrechte Erstreckung der Wellenflanken, die im Bereich der Eindrückungen zur Erzielung eines nietförmigen Verhakungsquerschnittes erforderlich sind, führt jedoch zu einem relativ grossen Materialaufwand und damit zu einem höheren Herstellungspreis dieser Rohre, der sich insbesondere auch dadurch erhöht, dass das bei der doppelwandigen Ausbildung der Rohre notwendige dünnere Blechband einen höheren Preis pro Gewichtseinheit hat als dickeres Blechband.

Der Erfindung liegt daher die Aufgabe zugrunde, ein Wellrohr der eingangs genannten Gattung zu schaffen, welches hinsichtlich des zu seiner Herstellung erforderlichen Materials möglichst billig ist und ausserdem hohe Biegsamkeit und Elastizität in Achsrichtung besitzt.

Dies wird durch die kennzeichnenden Teile der im Anspruch 1 angegebenen Ausbildung erreicht.

Durch den V-förmigen oder sägezahnförmigen Querschnitt der keine Niederdrückungen besitzenden Wellen mit schräg zur Rohrachse sich erstreckenden Flanken wird eine erhebliche Materialersparnis erzielt. Andererseits ist durch die sich etwa senkrecht zur Rohrachse erstreckenden Flanken bzw. Seitenwände der die Niederdrückungen aufweisenden Wellen gewährleistet, dass die Niederdrückungen zu einer etwa S-förmigen Ausbauchung der Wellenflanken führen, wodurch eine sichere Verhakung der ineinanderliegenden Wellen zweier benachbarter Bandwickel gewährleistet ist.

Bei einer bevorzugten Ausführungsform erstrecken sich die Niederdrückungen nur stellenweise über einen kurzen Bereich des Rohrumfanges. Hierdurch ist an deren Enden im Übergangsbereich eine zweidimensionale Verformung der Wellen gegeben, die eine ausserordentlich hohe Steifigkeit der Wellenverhakung gewährleistet, so dass selbst bei einem Wellrohr aus einem folienartigen, besonders dünnen Band die Gefahr des Aufweitens bzw. Auseinanderziehens der verhakten Wellen beseitigt wird.

Dabei kann die in tangentialer Richtung der Rohrwandung gemessene Länge der Niederdrückungen etwa der Höhe der unverformten, also nicht niedergedrückten Wellen entsprechen. Um die Biegsamkeit des Wellrohres durch die Niederdrückungen nicht zu beeinträchtigen, ist es vorteilhaft, dass diejenigen Wellen, welche den Wellen mit niedergedrückten Scheiteln jeweils benachbart sind, zumindest im Bereich neben den Niederdrückungen unverformt, also ohne Niederdrückungen ausgebildet sind.

Aus optischen und herstellungstechnischen Gründen können die Niederdrückungen nur in den rohreinwärts gerichteten Tälern der ineinanderliegenden Wellen angeordnet und durch radiales Herausdrücken der Scheitel der Wellentäler rohrauswärts gebildet sein. Es ist jedoch auch eine umgekehrte Ausbildung möglich.

Die V- oder sägezahnförmigen Querschnitt besitzenden Wellen haben vorzugsweise etwa gleichgrosse Scheitelbreite, jedoch am Wellengrund grössere Querschnittsbreite wie bzw. als die Wellen mit Niederdrückungen, welche senkrecht oder nahezu senkrecht zur Rohrachse sich erstreckende Flanken bzw. Seitenwände aufweisen. Vorzugsweise ist das erfindungsgemässe Wellrohr zwischen den die Niederdrückungen aufweisenden Wellen einlagig ausgebildet, wobei sich seine aufeinanderfolgenden Bandwickel um weniger als deren halbe Breite überlappen.

Weitere Einzelheiten der Erfindung ergeben sich aus der folgenden Beschreibung der in der Zeichnung dargestellten besonders vorteilhaften Ausführungsbeispielen:

Fig. 1 zeigt eine Seitenansicht eines Abschnittes einer Ausführungsform des erfindungsgemässen Rohres, wobei am rechten Ende dieses Abschnittes die vordere Wand teilweise weggebrochen ist, so dass man in das Rohrinnere Einsicht hat.

Fig. 2 zeigt einen Längsschnitt durch diese Ausführungsform in grösserem Massstab (Axiallängsschnitt).

Fig. 3 zeigt einen Axiallängsschnitt durch eine andere Ausführungsform des erfindungsgemässen Rohres in gleichem Massstab wie Fig. 2.

Fig. 4 zeigt einen teilweisen Schnitt durch eine Niederdrückung zweier ineinanderliegender Wellen in einer anderen Ausführungsform in Axiallängsrichtung des Rohres.

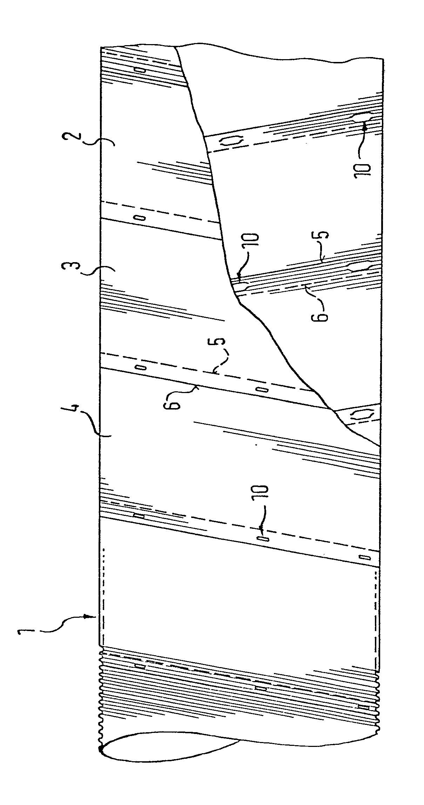

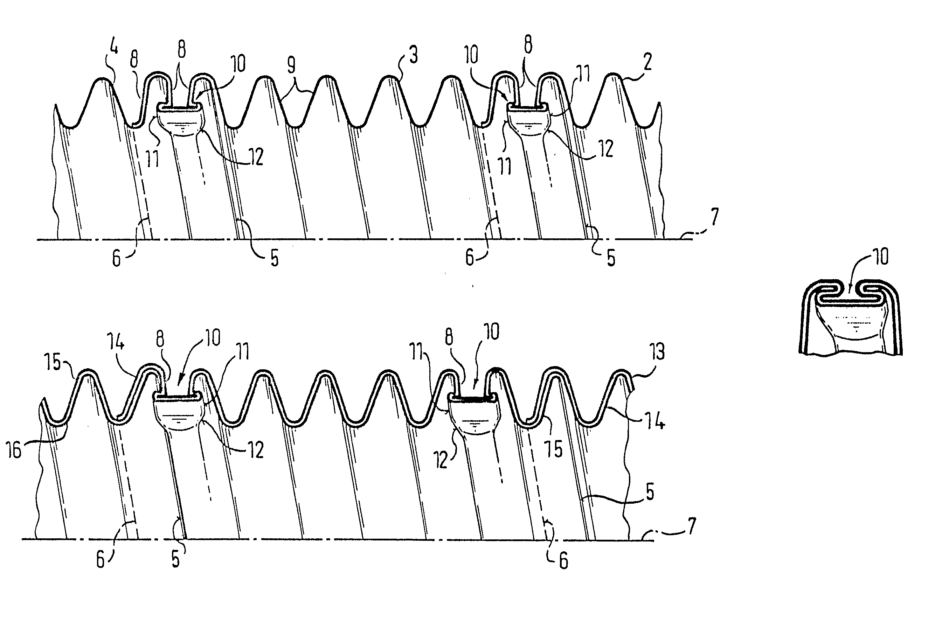

Bei dem in Fig. 1 und 2 dargestellten Ausführungsbeispiel überlappen sich die gewellten Bandwickel 2, 3, 4 des Rohres 1 mit ihren Wickelrändern in Axialrichtung des Rohres nur über etwa 1¹/₂ Wellenlängen. Es liegen also etwa 1¹/₂ Wellen des Bandwickels 2 in wiederum 1¹/₂ Wellen des einen Randes des anschliessenden Bandwickels 3. Mit seinem anderen Rand liegt dieser Bandwickel wiederum mit etwa 1¹/₂ Wellen in 1¹/₂ Wellen des daraufolgenden Bandwickels 4. Nur in diesen relativ kurzen Überlappungsbereichen ist das Rohr 1 zweilagig, während es zwischen den Überlappungsbereichen einlagig ist, wie sich aus Fig. 2 ergibt. Die Randkanten der überlappenden Ränder der Bandwickel 2 und 3 sind mit 5 und 6 bezeichnet und liegen so in einer Welle des benachbarten Bandwickels, dass sie in dieser sowohl in radialer als auch in axialer Richtung abgestützt sind, wie dies in der Zeichnung dargestellt ist. Während die an den Rändern der Bandwickel 2, 3, 4 befindlichen, sich überlappenden Wellen sich etwa senkrecht zur Rohrachse 7 erstreckende Flanken 8 haben, haben die zwischen den Randwellen befindlichen Wellen der Bandwickel 2, 3, 4 schräge Flanken 9, so dass sich im Querschnitt etwa V-förmige oder sägezahnförmige Wellen ergeben. Hierdurch wird im Überlappungsbereich eine feste Verbindung der ineinanderliegenden Wellen gewährleistet. Die grössere Breite der Wellen im mittleren Bereich der Bandwickel 2, 3, 4, führt zu einer Materialersparnis und zu einer höheren Elastizität des Rohres in Achsrichtung.

Um ein Lösen der ineinanderliegenden Wellen mit senkrecht zur Rohrachse 7 sich erstreckenden Flanken 8 an den Rändern der Bandwickel 2, 3, 4 zu vermeiden, sind deren im Überlappungsbereich ineinanderliegende rohreinwärts gerichtete Wellenscheitel etwa punktförmig, also nur über einen kleinen Teil des Rohrumfanges nach aussen ein- bzw. niedergedrückt. Hierdurch ergeben sich stellenweise nietförmige Verformungen 10 dieser Wellenscheitel, die ein Ausbauchen oder Ausknicken 11 der seitlichen Wellenflanken ergeben. Das Niederdrücken der vorgenannten Wellenscheitel ist so vorgenommen, dass der sich dabei ergebende verbreiterte, abgeflachte Scheitelbereich sich in etwa halber Höhe der unverformten Wellen erstreckt. Der Übergangsbereich zwischen dieser Niederdrückung 10 und den unverformten Nachbarbereichen der ineinanderliegenden Wellen ist mit 12 bezeichnet.

Durch diese Niederdrückung 10 der rohreinwärts gerichteten Wellenscheitel über nur einen kurzen Bereich des Rohrumfanges ist eine stellenweise Verhakung der ineinanderliegenden Wellen der beiden benachbarten Bandwickel 2, 3, 4 gegeben, wobei im Übergangsbereich 12 zwischen den unverformten Teilen dieser Wellenscheitel und den verformten Wellenscheiteln eine zweidimensionale Verformung gegeben ist. Hierdurch wird eine ausserordentlich hohe Stabilität der Wellenverhakung gewährleistet, was auch bei einem Wellrohr aus einem folienartigen, besonders dünnen Blechband die Gefahr des Aufweitens der verhakten Wellen bis zur Möglichkeit des Auseinandergleitens dieser Wellen beseitigt.

Das in Fig. 3 gezeigte Ausführungsbeispiel des erfindungsgemässen Rohres unterscheidet sich von demjenigen gemäss Fig. 1 und 2 im wesentlichen dadurch, dass das Rohr über seine gesamte Länge, also auch im mittleren Bereich der Bandwickel 13, 14, 15, 16 zweilagig ist. Dies ist dadurch erreicht, dass jeweils aufeinanderfolgende Bandwickel sich um jeweils die Hälfte ihrer Wickelbreite überdecken. In dem in Fig. 3 gezeigten Ausführungsbeispiel geschieht dies mit jeweils sieben Wellen. Lediglich zwischen der linken Randkante 6 des Bandwickels 13 und der rechten Randkante 5 des übernächsten Bandwickels 15 ist eine Dreilagigkeit des Rohres gegeben.

Die unmittelbar neben dem Überlappungsbereich eines Bandwickels (z.B. 16) mit dem übernächsten Bandwickel (z.B. 14) liegenden rohreinwärts gerichteten Wellenscheitel sind zur nietförmigen Verhakung der unmittelbar aufeinanderfolgenden Wickel (z.B. 15 und 14) jeweils über eine kurze Länge des Rohrumfanges so rohrauswärts niedergedrückt, dass sich in den an diese Wellenscheitel anschliessenden Wellenflanken 8 zur Verhakung führende Ausknickungen 11 ergeben. Um im Bereich dieser Niederdrückungen 10 die genannten Ausknickungen zu ermöglichen, erstrecken sich die an die niedergedrückten Wellenscheitel anschliessenden Wellenflanken im Gegensatz zu den Flanken der übrigen Wellen etwa senkrecht zur Rohrachse 7, wie dies auch bei dem Ausführungsbeispiel gemäs Fig. 1 und 2 der Fall ist.

Es kann möglich sein, dass sich bei der Herstellung der Niederdrückungen 10 nicht genau die in Fig. 2 und 3 gezeigte Querschnittsform der niedergedrückten Welle ergibt, sondern dass sich die Ausknickungen 11 weniger kantig ausbilden, so dass eine im Querschnitt etwa angenähert S-förmige Form der Flanken der eingedrückten Welle entsteht.

Bei dem in Fig. 4 dargestellten Ausführungsbeispiel sind die Niederdrückungen 10 der rohreinwärts gerichteten Scheitel zweier ineinanderliegender Wellen so tief, dass sie praktisch bis an die rohrauswärts liegenden benachbarten Wellenscheitel heranreichen.

Bei beiden Ausführungsbeispielen liegen die seitlichen Ränder 5, 6 der Bandwickel jeweils in einem Wellental und zwar derart, dass sie in Richtung der Rohrachse 7 in diesem Wellental abgestützt sind. So liegen die an der Rohraussenseite befindlichen, in Fig. 2 und 3 linken, Wickelränder 6 in einem von der Aussenseite gesehenen Wellental, wobei die Wickel an diesen Rändern noch soweit in dieses Wellental hineingewölbt sind, dass sich die axiale Abstützung der Ränder in diesem Wellental ergibt. Die rohreinwärts liegenden, in Fig. 2 und 3 rechten, Wickelränder 5 liegen dagegen in einem von der Rohrinnenseite gesehenen Wellental und sind mit ihrer Randkante ebenso in dieses Wellental hineingebogen, um die axiale Abstützung in diesem Wellental zu gewährleisten.

## Patentansprüche

1. Flexibles Wellrohr (1) aus einem schraubenlinienförmig gewickelten dünnen Blechband mit parallel zu seiner Längsrichtung sich erstreckenden Wellen, bei welchem Rohr jeweils mindestens eine Welle des einen Seitenrandes eines Bandwickels (2) in mindestens einer Welle am anderen überlappenden Seitenrand des folgenden Bandwickels (3) liegt und die Scheitel von ineinandergelegten Wellen nur um einen Teil der Wellenhöhe derart niedergedrückt sind, dass die derart verformten Wellenscheitel breiter sind als der sich anschliessende Wellenquerschnitt, wobei die niedergedrückte Scheitel besitzenden Wellen ausserhalb der Niederdrückungen (10) etwa senkrecht oder nahezu senkrecht zur Rohrachse (7) sich erstreckende Flanken bzw. Seitenwände (8) haben, dadurch gekennzeichnet, dass die dazwischen befindlichen Wellen ohne Niederdrückungen (10) V- oder sägezahnförmigen Querschnitt mit sich schräg zur Rohrachse (7) erstreckenden Flanken oder Seitenwänden (9) besitzen.

2. Wellrohr nach Anspruch 1, dadurch gekennzeichnet, dass die V- oder sägezahnförmigen Querschnitt besitzenden Wellen grössere Querschnittsbreite haben als die senkrecht oder nahezu senkrecht zur Rohrachse (7) sich erstreckende Flanken bzw. Seitenwände aufweisenden Wellen mit Niederdrückungen (10).

3. Wellrohr nach Anspruch 1, dadurch gekennzeichnet, dass die Scheitelbreite der Wellen mit V- oder sägezahnförmigem Querschnitt etwa gleich gross wie die Scheitelbreite der Wellen mit senkrechten oder nahezu senkrechten Wellenseitenwänden ist.

4. Wellrohr nach Anspruch 1, dadurch gekennzeichnet, dass die die Niederdrückungen (10) besitzenden Wellen an den Rändern der Bandwickel (2, 3, 4, 13, 14, 15, 16) angeordnet sind und die V- oder sägezahnförmigen Querschnitt aufweisenden Wellen im mittleren Bereich der Bandwickel liegen.

5. Wellrohr nach Anspruch 1, dadurch gekennzeichnet, dass es zwischen den die Niederdrückungen (10) aufweisenden Wellen einlagig ausgebildet ist, also sich seine aufeinanderfolgenden Bandwickel um weniger als deren halbe Breite überlappen.

6. Wellrohr nach Anspruch 1, dadurch gekennzeichnet, dass es zwischen den die Niederdrückungen (10) aufweisenden Wellen mehrlagig ausgebildet ist, wobei sich seine aufeinanderfolgenden Bandwickel (2, 3, 4, 13, 14, 15, 16) um mindestens die halbe Wickelbreite überlappen.

7. Wellrohr nach Anspruch 1, dadurch gekennzeichnet, dass die Niederdrückungen (10) an den zur Rohrachse (7) hin gerichteten Wellenscheiteln angeordnet sind.

8. Wellrohr nach Anspruch 1, dadurch gekennzeichnet, dass die Niederdrückungen (10) an den rohrauswärts gerichteten Wellenscheiteln angeordnet sind.

9. Wellrohr nach Anspruch 1, dadurch gekennzeichnet, dass die Niederdrückungen (10) nur stellenweise über einen Teil des Rohrumfanges sich erstreckend angeordnet sind.

10. Wellrohr nach Anspruch 9, dadurch gekennzeichnet, dass die in tangentialer Richtung der Rohrwandung gemessene Länge der Niederdrückungen (10) etwa der Höhe der unverformten (nicht niedergedrückten) Wellen entspricht.

11. Wellrohr nach Anspruch 1, dadurch gekennzeichnet, dass die den Wellen mit niedergedrückten Scheiteln jeweils benachbarten Wellen zumindest im Bereich neben den Niederdrückungen (10) unverformt, d.h. ohne Niederdrückungen ausgebildet sind.

12. Wellrohr nach Anspruch 1, dadurch gekennzeichnet, dass die Wellenscheitel um etwa oder mehr als die halbe Höhe der unverformten (nicht niedergedrückten) Wellen niedergedrückt sind.

13. Wellrohr nach Anspruch 1, dadurch gekennzeichnet, dass die seitlichen Ränder (5, 6) der Bandwickel (2, 3, 4, 13, 14, 15, 16) jeweils in einem Wellental liegen.

14. Wellrohr nach Anspruch 13, dadurch gekennzeichnet, dass die in einem Wellental liegenden Ränder (5, 6) der Bandwickel (2, 3, 4, 13, 14, 15, 16) in das sie aufnehmende Wellental des benachbarten Bandwickels so hineingebogen sind, dass sich eine Abstützung dieses Wickelrandes in diesem Wellental in Richtung der Rohrachse (7) ergibt.

15. Wellrohr nach Anspruch 13, dadurch gekennzeichnet, dass die Wellen, in deren Tälern die seitlichen Bandränder liegen, unverformt sind, d.h. keine Niederdrückungen (10) haben.

16. Wellrohr nach Anspruch 15, dadurch gekennzeichnet, dass die Niederdrückungen (10) in den Wellen angeordnet sind, die sich unmittelbar neben denjenigen Wellen befinden, in deren Tälern die Bandränder (5, 6) liegen.

17. Wellrohr nach Anspruch 1, dadurch gekennzeichnet, dass die Flanken der die Niederdrückungen (10) aufweisenden Wellen sich in einem Winkel von mindestens 80° zur Rohrachse (7) erstrecken.

18. Wellrohr nach Anspruch 1, dadurch gekennzeichnet, dass die Flanken der keine Niederdrückungen (10) aufweisenden Wellen sich in einem Winkel von 40° bis 70° zur Rohrachse (7) erstrecken.

## Revendications

1. Tuyau ondulé flexible (1), fabriqué à partir d'un feuillard de tôle mince enroulé en hélice, aux ondes s'étendant parallèlement à sa direction longitudinale, tuyau pour lequel respectivement au moins une onde de l'un des bords d'une spire de feuillard (2) repose dans au moins une onde contre l'autre bord à recouvrement de la spire de feuillard suivante (3) et pour lequel le sommet des ondes emboîtées l'une dans l'autre sont écrasés, sur une partie seulement de la hauteur d'onde, de façon telle que les sommets d'onde ainsi déformés sont plus larges que la section d'onde qui s'y raccorde, les ondes qui présentent les sommets écrasés ayant, en dehors des écrasements (10), des flancs ou parois latérales (8) qui s'étendent à peu près perpendiculairement ou approximativement perpendiculairement à l'axe du tuyau (7), caractérisé en ce que les ondes sans écrasements (10), qui se trouvent entre les ondes avec écrasements, possèdent une section en forme de V ou de dent de scie avec des flancs ou des parois latérales (9) qui s'étendent obliquement par rapport à l'axe du tuyau.

2. Tuyau ondulé flexible selon la revendication 1, caractérisé en ce que les ondes qui possèdent une section en forme de V ou de dent de scie ont une plus grande largeur de section que les ondes avec écrasements (10) qui présentent des flancs ou parois latérales qui s'étendent perpendiculairement ou presque perpendiculairement par rapport à l'axe du tuyau (7).

3. Tuyau ondulé flexible selon la revendication 1, caractérisé en ce que la largeur au sommet des ondes à section en forme de V ou de dent de scie est à peu près aussi grande que la largeur au sommet des ondes à parois latérales d'onde perpendiculaires ou presque perpendiculaires.

4. Tuyau ondulé flexible selon la revendication 1, caractérisé en ce que les ondes possédant les écrasements (10) sont disposées sur les bords de la spire de feuillard (2, 3, 4, 13, 14, 15, 16); et en ce que les ondes présentant une section en forme de V ou de dent de scie sont situées dans la zone médiane de la spire de feuillard.

5. Tuyau ondulé flexible selon la revendication 1, caractérisé en ce qu'il est constitué d'une seule couche entre les ondes présentant les écrasements (10), donc que ses spires successives de feuillard se recouvrent de moins de leur demi-largeur.

6. Tuyau ondulé flexible selon la revendication 1, caractérisé en ce qu'il est constitué de plusieurs couches entre les ondes présentant les écrasements (10), ses spires successives (2, 3, 4, 13, 14, 15, 16) se recouvrant d'au moins la demi largeur de spire.

7. Tuyau ondulé flexible selon la revendication 1, caractérisé en ce que les écrasements (10) sont disposés aux sommets d'onde dirigés en direction de l'axe du tuyau (7).

8. Tuyau ondulé flexible selon la revendication 1, caractérisé en ce que les écrasements (10) sont disposés aux sommets d'onde dirigés vers l'extérieur du tuyau.

9. Tuyau ondulé flexible selon la revendication 1, caractérisé en ce que les écrasements (10) sont disposés de façon à ne s'étendre que par places sur une partie de la périphérie du tuyau.

10. Tuyau ondulé flexible selon la revendication 9, caractérisé en ce que la longueur, mesurée tangentiellement à la paroi du tuyau, des écrasements (10) correspond à peu près à la hauteur des ondes non déformées (non écrasées).

11. Tuyau ondulé flexible selon la revendication 1, caractérisé en ce que les ondes respectivement voisines des ondes à sommets écrasés sont prévues non déformées, c'est-à-dire sans écrasements, tout au moins dans la zone voisine des écrasements (10).

12. Tuyau ondulé flexible selon la revendication 1, caractérisé en ce que les sommets d'onde sont écrasés d'à peu près ou de plus que la demi-hauteur des ondes non déformées (non écrasées).

13. Tuyau ondulé flexible selon la revendication 1, caractérisé en ce que les bords latéraux (5, 6) des spires de feuillard (2, 3, 4, 13, 14, 15, 16) sont respectivement situés dans un creux d'onde.

14. Tuyau ondulé flexible selon la revendication 13, caractérisé en ce que les bords, situés dans un creux d'onde (5, 6) des spires de feuillard (2, 3, 4, 13, 14, 15, 16) sont repliés dans le creux d'onde qui les reçoit, de la spire de feuillard voisine de telle façon qu'il en résulte un appui de ce bord de spire dans ce creux d'onde dans la direction de l'axe du tuyau.

15. Tuyau ondulé flexible selon la revendication 13, caractérisé en ce que les ondes dans les creux desquels se trouvent les bords latéraux de feuillard ne sont pas déformées, c'est-à-dire n'ont pas d'écrasement (10).

16. Tuyau ondulé flexible selon la revendication 15, caractérisé en ce que les écrasements (10) sont disposés dans les ondes qui se trouvent immédiatement à côté des ondes dans les creux desquels se trouvent les bords de feuillard (5, 6).

17. Tuyau ondulé flexible selon la revendication 1, caractérisé en ce que les flancs des ondes qui présentent les écrasements (10) s'étendent selon un angle d'au moins 80° par rapport à l'axe du tuyau (7).

18. Tuyau ondulé flexible selon la revendication 1, caractérisé en ce que les flancs des ondes qui ne présentent pas d'écrasements (10) s'étendent selon un angle de 40° à 70° par rapport à l'axe du tuyau (7).

**Claims**

1. Flexible corrugated tube (1) of a spirally coiled thin metal strip having corrugations extending parallel to its longitudinal direction, in which tube at least one corrugation of the one side edge of a strip coil (2) lies in each case in at least one corrugation on the other overlapping side edge of the following strip coil (3) and the crests of corrugations lying within one another are pressed down only for a part of the corrugation height in such manner that the corrugation crests so deformed are wider than the adjacent corrugation cross-section, the corrugations having pressed-down crests having outside the depressions (10) flanks or side walls (8) which extend approximately perpendicularly or nearly perpendicularly to the tube axis (7), characterised in that the corrugations located therebetween without depressions (10) have a V-shaped or saw-tooth-shaped cross-section having flanks or side walls (9) extending obliquely to the tube axis (7).

2. Corrugated tube according to claim 1 characterised in that the corrugations having V-shaped or saw-tooth-shaped cross-section have larger cross-sectional width than the corrugations having depressions (10) and having flanks or side walls extending at right angles or nearly at right angles to the tube axis (7).

3. Corrugated tube according to claim 1 characterised in that the crest width of the corrugations having V-shaped or saw-tooth-shaped cross-section is approximately the same size as the crest width of the corrugations having perpendicular or almost perpendicular side walls.

4. Corrugated tube according to claim 1 characterised in that the corrugations having the depressions (10) are arranged on the edges of the spiral strips (2, 3, 4, 13, 14, 15, 16) and the corrugations having V-shaped or saw-tooth-shaped cross-section lie in the center region of the spiral strips.

5. Corrugated tube according to claim 1 characterised in that it is constructed in one layer between the corrugations having the depressions (10), thus its sequential spiral strips overlap for less than half their breadth.

6. Corrugated tube according to claim 1 characterised in that it is constructed in a plurality of layers between the corrugations having depressions (10), the sequential spiral strips (2, 3, 4, 13, 14, 15, 16) overlapping by at least half the coil breadth.

7. Corrugated tube according to claim 1 characterised in that the depressions (10) are arranged on the corrugation crests directed towards the tube axis (7).

8. Corrugated tube according to claim 1 characterised in that the depressions (10) are arranged on the corrugation crests directed outwardly of the tube.

9. Corrugated tube according to claim 1 characterised in that the depressions (10) are arranged only at individual locations extending over a part of the periphery of the tube.

10. Corrugated tube according to claim 9 characterised in that the length of the depressions (10) measured in the tangential direction of the tube wall corresponds approximately to the height of the undeformed (non-depressed) corrugations.

11. Corrugated tube according to claim 1 characterised in that each corrugation adjoining the corrugations with depressed crests is constructed to be undeformed, i.e. without depressions, at least in the region adjacent the depressions (10).

12. Corrugated tube according to claim 1 characterised in that the corrugation crests are depressed to an amount which is substantially half the height of the undeformed (non-depressed) corrugations or more.

13. Corrugated tube according to claim 1 characterised in that each lateral edge (5, 6) of the spiral strip (2, 3, 4, 13, 14, 15, 16) lies in a corrugation trough.

14. Corrugated tube according to claim 13 characterised in that the edges (5, 6) of the spiral strip (2, 3, 4, 13, 14, 15, 16) lying in a corrugation trough are so bent into the receiving corrugation trough of the neighboring spiral strip that support for this spiral edge results in this corrugation trough in the direction of the tube axis (7).

15. Corrugated tube according to claim 13 characterised in that the corrugations in whose troughs the lateral strip edges lie are undeformed, i.e. have no depressions (10).

16. Corrugated tube according to claim 15 characterised in that the depressions (10) are arranged in the corrugations which are located directly adjacent the respective corrugations in whose troughs the strip edges (5, 6) lie.

17. Corrugated tube according to claim 1 characterised in that the flanks of the corrugations having the depressions (10) extend at an angle of at least 80° to the tube axis (7).

18. Corrugated tube according to claim 1 characterised in that the flanks of the corrugations having no depressions (10) extend at an angle of 40° to 70° to the tube axis (7).